# FASCICULE DE BREVET EUROPEEN

(11) **EP 1 223 840 B1**
(45) Date de publication et mention de la délivrance du brevet: **14.06.2006**
(21) Numéro de dépôt: 01905855.1
(22) Date de dépôt: 12.01.2001
(51) Int. Cl.: A47J 31/46, F16K 11/10

(54) **CAFETIERE ESPRESSO EQUIPEE D'UN SYSTEME DE PURGE DU BLOC THERMIQUE**
ESPRESSOMASCHINE MIT EINEM ABWASSERSYSTEM FÜR DAS HEIZELEMENT
ESPRESSO COFFEEMAKER EQUIPPED WITH A THERMAL BLOCK PURGING SYSTEM

(30) Priorité: 14.01.2000 FR 0000555
(43) Date de publication de la demande: 24.07.2002
(73) Titulaire: SEB S.A., 69130 Ecully (FR)
(72) Inventeur: MORIN, Gilles, 14210 Sainte Honorine Du Fay (FR); MORCEL, Luc, F-14123 Cormelles Le Royal (FR)
(74) Mandataire: Kiehl, Hubert
(86) Numéro de dépôt international: PCT/FR2001/000100
(87) Numéro de publication internationale: WO 2001/050931

(56) Documents cités:
- EP-A- 0 690 234
- FR-A- 2 364 640
- GB-A- 1 170 878
- US-A- 2 670 751
- US-A- 3 967 635

## Description

La présente invention se rapporte à une machine de préparation d'infusion du type cafetière espresso comportant une pompe, un bloc thermique destiné à recevoir et à chauffer de l'eau sous pression émise par la pompe, la pompe et le bloc thermique étant reliés entre eux par une canalisation principale, une canalisation de purge du bloc thermique constituant une dérivation de la canalisation principale, un organe de distribution qui est interposé entre la pompe et le bloc thermique, conçu pour sélectivement mettre en communication la pompe et le bloc thermique, ou le bloc thermique et la canalisation de purge, et qui comporte des moyens agissant lorsque l'organe de distribution passe d'un premier état où il met en communication la pompe et le bloc thermique, à un deuxième état où il met en communication le bloc thermique et la canalisation de purge. Une telle machine est connue du document FR - A- 2 364 640.

De telles machines sont prévues pour des utilisations répétées avec des intervalles de temps très courts entre chaque utilisation. Le temps de cycle de fonctionnement d'une telle cafetière est donc une donnée fondamentale permettant d'apprécier sa qualité et sa conformité aux exigences des utilisations courantes. Le temps de cycle de fonctionnement comprend la durée de la phase de préparation de l'infusion, mais également le temps nécessaire à la purge de certains organes , tels le bloc thermique dans lequel est effectuée l'opération de chauffe de l'eau, entre deux phases de préparation d'infusion.

Il est fréquent, sur de nombreux modèles de cafetières espresso, que les canalisations s'entartrent et que, si aucun système spécifique n'est prévu pour limiter ce risque, le temps nécessaire à la purge du bloc thermique soit augmenté de façon inacceptable.

Le but de l'invention est de remédier à cet inconvénient, et pour cela, de proposer un système d'une grande simplicité qui permette de réaliser la purge du bloc thermique de façon rapide et efficace.

A cet effet, l'invention a pour objet une cafetière espresso du type précité, caractérisée en ce que lesdits moyens sont des moyens d'aspiration prévus pour créer une dépression dans la canalisation principale par rapport au bloc thermique, telle que l'eau résiduelle contenue dans le bloc thermique est aspirée dans la canalisation de purge.

Grâce à cette disposition, en fin de phase de préparation de l'infusion, l'eau résiduelle contenue dans le bloc thermique est évacuée sous l'effet d'une dépression créée dans la canalisation principale par les moyens d'aspiration, qui se conjugue à une légère surpression dans le bloc thermique due à la formation de vapeur. De ce fait, la purge du bloc thermique est réalisée avec une rapidité largement accrue.

D'autres caractéristiques et avantages de l'invention ressortiront de la description qui va suivre, donnée à titre d'exemple non limitatif, en référence aux dessins annexés dans lesquels:
- la figure 1 est une vue schématique d'une partie de circuit d'alimentation en eau d'une cafetière espresso suivant l'invention ;
- la figure 2 est une vue de côté d'un organe de distribution d'une cafetière espresso suivant l'invention ;
- les figures 3 et 4 sont des coupes suivant la ligne A-A, d'un organe de distribution suivant la figure 2, respectivement dans un état où le bloc thermique est alimenté, et dans un état où le bloc thermique est purgé ;
- la figure 5 est une vue en coupe suivant la ligne B-B d'un organe de distribution suivant la figure 3.

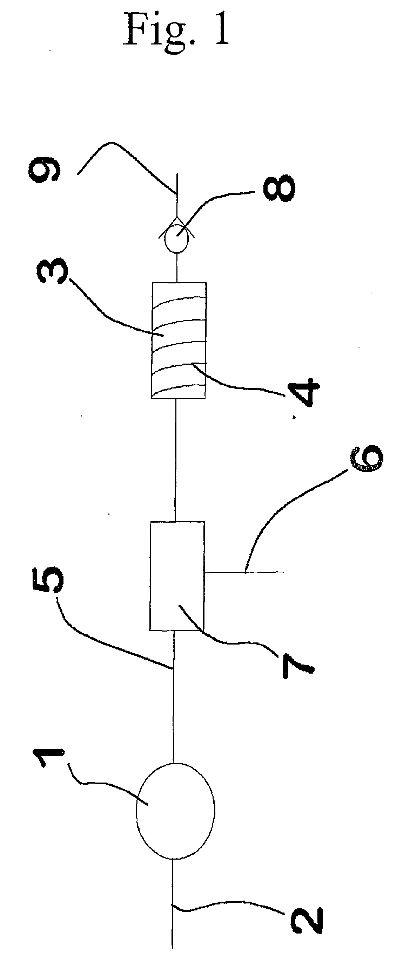

A la figure 1, on a représenté schématiquement une partie de circuit d'alimentation en eau d'une cafetière espresso suivant l'invention. Cette partie de circuit comporte une pompe 1 destinée à mettre en circulation sous pression de l'eau provenant d'un réservoir d'eau via une canalisation d'alimentation 2 ; un bloc thermique 3 destiné à recevoir et à chauffer de l'eau sous pression émise par la pompe 1, ce bloc thermique 3 étant généralement constitué d'un cylindre métallique creux dont l'enveloppe est chauffée par un conducteur électrique résistif 4 enroulé sur sa périphérie. La pompe 1 et le bloc thermique 3 sont reliés entre eux par une canalisation principale 5, une canalisation de purge 6 du bloc thermique 3 constituant une dérivation de la canalisation principale 5. La partie de circuit représentée comprend en outre un organe de distribution 7 interposé entre la pompe 1 et le bloc thermique 3, conçu pour sélectivement mettre en communication la pompe 1 et le bloc thermique 3, ou le bloc thermique 3 et la canalisation de purge 6. En sortie du bloc thermique 3, une canalisation de distribution 9 est prévue pour conduire l'eau préalablement chauffée dans le bloc thermique 3, vers un siège de préparation de l'infusion. Le sens de conduction de l'eau à partir du bloc thermique 3 est dépendant de l'état d'un clapet anti-retour 8 affecté à la canalisation de distribution 9 : en phase d'utilisation d'eau chaude, le clapet 8 est commandé à ouverture ; en phase de purge du bloc thermique 3, il est commandé à fermeture.

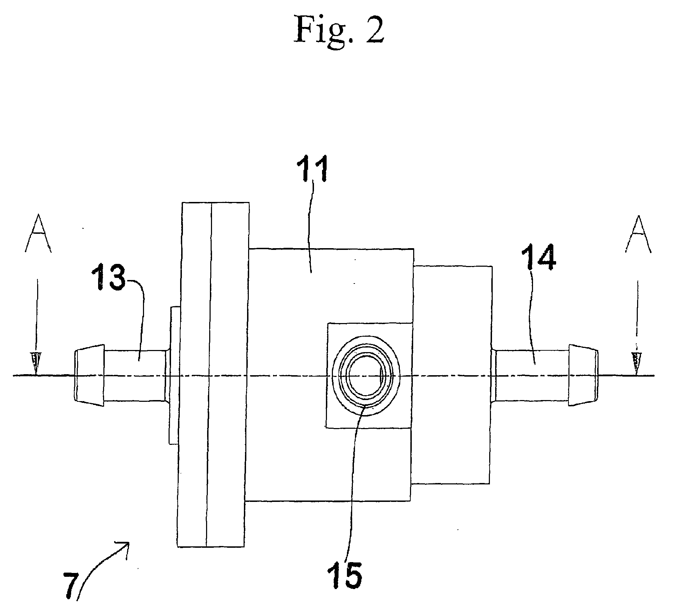

Les figures 2 à 4 montrent plus précisément la constitution d'un organe de distribution 7 permettant de réaliser l'invention.

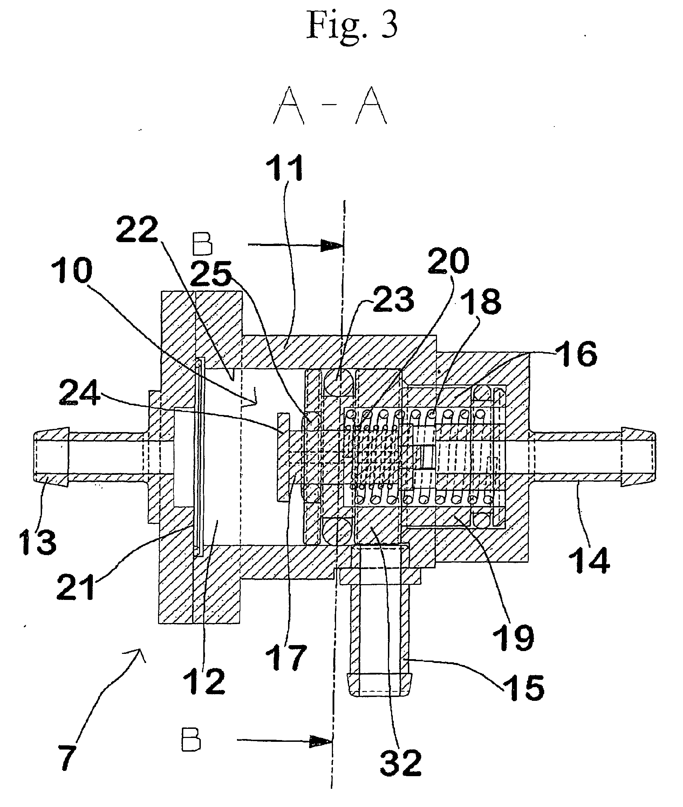

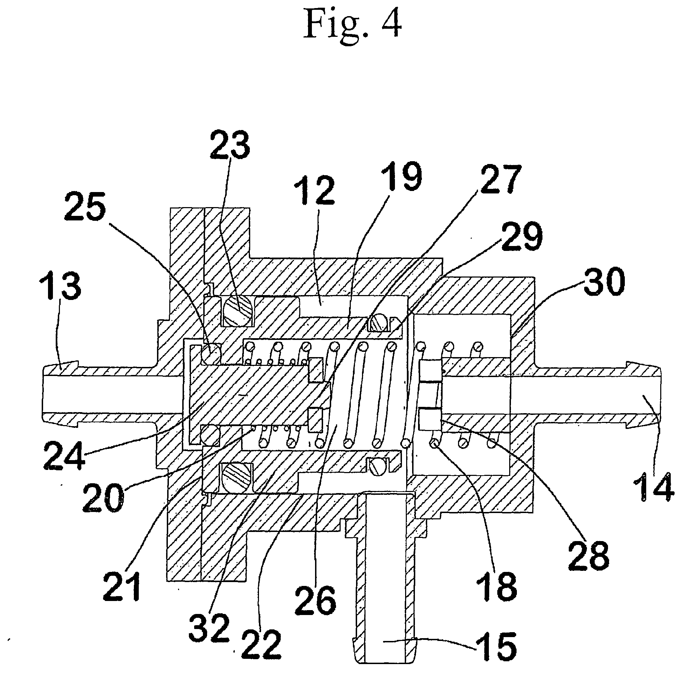

Suivant l'invention, un tel organe de distribution 7 comporte des moyens d'aspiration 10, agissant lorsque l'organe de distribution passe d'un premier état, représenté à la figure 3, où il met en communication la pompe 1 et le bloc thermique 3, à un deuxième état, représenté à la figure 4, où il met en communication le bloc thermique 3 et la canalisation de purge 6. Ces moyens d'aspiration 10 sont prévus pour créer une dépression dans la canalisation principale 5 par rapport au bloc thermique 3, telle que l'eau résiduelle contenue dans le bloc thermique 3 est aspirée dans la canalisation de purge 6.

Suivant une caractéristique particulière de l'invention, les moyens d'aspiration comprennent un boîtier 11 délimitant une chambre de réception d'eau 12, et présentant un premier et un deuxième embouts 13, 14 qui relient la chambre 12 à la canalisation principale 5, respectivement du côté de la pompe 1 et du côté du bloc thermique 3, ainsi qu'un troisième embout 15 connecté à la canalisation de purge 6 ; un équipage mobile 16 à piston, agencé entre les premier et deuxième embouts (13, 14) et monté coulissant dans la chambre 12, entre une première position correspondant au premier état de l'organe de distribution 7 et une deuxième position correspondant au deuxième état de l'organe de distribution 7, ledit équipage mobile 16 étant soumis dans sa course à un ressort de rappel principal 18 disposé axialement au deuxième embout 14.

L'équipage mobile 16 comporte un manchon 19 monté coulissant dans la chambre 12 à l'encontre dudit ressort principal 18, et susceptible de venir coiffer le deuxième embout 14, ainsi qu'un piston 17 monté à coulissement dans le manchon 19 à l'encontre d'un ressort de rappel secondaire 20.

Avant le début d'une phase de préparation d'infusion, le distributeur se trouve dans l'état représenté à la figure 4, dans lequel le piston 17 obture le premier embout 13 ; l'équipage mobile 16 est alors dans sa deuxième position. Dans cette position, le ressort de rappel principal 18 est au repos ou légèrement comprimé de manière à plaquer le manchon 19 sur la paroi de fond 21 de la chambre 12, attenante au premier embout 13. L'étanchéité périphérique entre le manchon 19 et la paroi périphérique interne 22 de la chambre 12 est réalisée par un premier joint torique 23 disposé autour du manchon 19. Le ressort de rappel secondaire 20 est également au repos ou légèrement comprimé de façon à presser la tête 24 du piston 17 contre un deuxième joint torique 25 disposé sur sa périphérie, lequel réalise l'étanchéité vers le volume intérieur 26 du manchon 19.

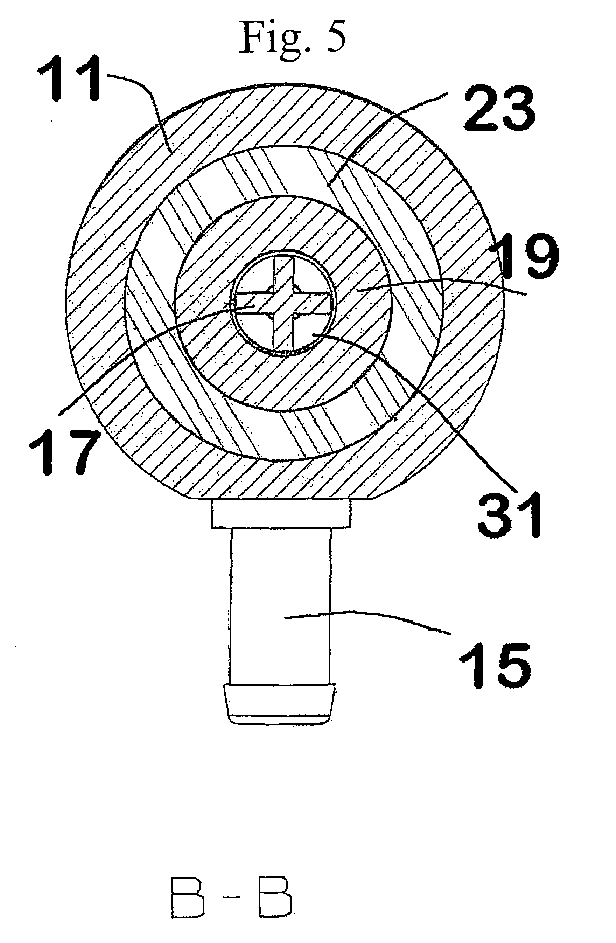

Lorsque l'utilisateur initie un cycle de préparation de café, de l'eau est émise par la pompe 1 vers l'organe de distribution 7, transite par la canalisation principale 5 et le premier embout 13 ; sous l'effet de la pression de l'eau, le piston 17 et le manchon 19 sont solidairement repoussés contre l'effet du ressort principal 18 vers le deuxième embout 14, en conservant l'étanchéité périphérique et l'étanchéité vers le volume intérieur 26 du manchon 19. L'extrémité 27 du piston 17 opposée à la tête 24 arrive alors en butée sur une extrémité 28 du deuxième embout 14 tournée vers l'intérieur de la chambre 12 ; la course du manchon 19 jusqu'à la position représentée à la figure 3, où son extrémité 29 bute contre la paroi de fond 30 de la chambre 12, attenante au deuxième embout 14, étant plus importante que la course du piston 17 entre ses deux positions extrêmes, la tête 24 se décolle légèrement du deuxième joint torique 25, contre l'effet du ressort de rappel secondaire 20, et l'eau contenue dans la chambre 12 peut s'écouler vers le volume intérieur 26 du manchon, et ainsi être dirigée vers le bloc thermique 3 via le deuxième embout 14. L'eau s'écoule de la chambre 12 vers le volume intérieur 26 du manchon 19, du fait de la présence d'évidements 31, s'étendant axialement sur le corps du piston 17. Ces évidements apparaissent plus clairement à la figure 5.

Pendant cette phase où le manchon 19 bute par son extrémité 29 sur la paroi de fond 30 située du côté du deuxième embout 14, ledit manchon obture le troisième embout 15 relié à la canalisation de purge 6. Cette obturation est notamment obtenue par une collerette 32 formée sur la périphérie du manchon 19.

Lorsque la quantité d'eau nécessaire à la préparation de l'infusion a été émise par la pompe 1 et que la phase de préparation est terminée, le clapet anti-retour 8 est commandé à fermeture, et l'équipage mobile 16 tend à reprendre sa position initiale du fait de l'absence de surpression dans la chambre 12 et du ressort de rappel principal 18. La collerette 32 dégage alors le troisième embout 15 et la tête de piston 24 reprend une position d'écrasement du deuxième joint torique 25, dans laquelle l'eau est empêchée de circuler entre le volume intérieur 26 du manchon 19, et la chambre 12. Sous l'effet du déplacement de l'équipage mobile 16, le manchon 19 par son joint 23 agit comme une seringue, et l'eau résiduelle contenue dans le bloc thermique 3 est aspirée et dirigée, via le troisième embout 15, vers la canalisation de purge 6.

De cette façon, la purge du bloc thermique 3 est réalisée pratiquement complètement et très rapidement. Par rapport à des circuits de distribution d'eau connus pour ce type de machines, les moyens additionnels mis en oeuvre sont des moyens mécaniques d'une grande simplicité, peu onéreux et fiables.

## Revendications

1. Cafetière espresso comportant une pompe (1), un bloc thermique (3) destiné à recevoir et à chauffer de l'eau sous pression émise par la pompe (1), la pompe (1) et le bloc thermique (3) étant reliés entre eux par une canalisation principale (5), une canalisation de purge (6) du bloc thermique (3) constituant une dérivation de la canalisation principale (5), un organe de distribution (7) qui est interposé entre la pompe (1) et le bloc thermique (3), conçu pour sélectivement mettre en communication la pompe (1) et le bloc thermique (3), ou le bloc thermique (3) et la canalisation de purge (6), et qui comporte des moyens agissant lorsque l'organe de distribution (7) passe d'un premier état où il met en communication la pompe (1) et le bloc thermique (3), à un deuxième état où il met en communication le bloc thermique (3) et la canalisation de purge (6),
**caractérisée en ce que** lesdits moyens sont des moyens d'aspiration (10) prévus pour créer une dépression dans la canalisation principale (5) par rapport au bloc thermique (3), telle que l'eau résiduelle contenue dans le bloc thermique (3) est aspirée dans la canalisation de purge (6).

2. Cafetière espresso selon la revendication 1,
**caractérisée en ce que** les moyens d'aspiration (10) comprennent un boîtier (11) délimitant une chambre de réception d'eau (12), et présentant un premier et un deuxième embouts (13, 14) qui relient la chambre (12) à la canalisation principale (5), respectivement du côté de la pompe (1) et du côté du bloc thermique (3), ainsi qu'un troisième embout (15) connecté à la canalisation de purge (6) ; un équipage mobile (16) à piston agencé entre les premier et deuxième embouts (13, 14) et monté coulisant dans Ja chambre (12) entre une première position correspondant au premier état de l'organe de distribution (7) et une deuxième position correspondant au deuxième état de l'organe de distribution (7), ledit équipage mobile (16) étant soumis dans sa course à un ressort de rappel principal (18) disposé axialement au deuxième embout (14).

3. Cafetière espresso selon la revendication 2,
**caractérisée en ce que** l'équipage mobile (16) comporte un manchon (19) monté coulissant dans la chambre (12) à l'encontre dudit ressort principal (18) et susceptible de venir coiffer le deuxième embout (14), ainsi qu'un piston (17) monté à coulissement dans le manchon (19) à l'encontre d'un ressort de rappel secondaire (20).

4. Cafetière espresso selon la revendication 3,
**caractérisée en ce que** le piston (17) obture le premier embout (13) dans la deuxième position de l'équipage mobile (16), tandis que le manchon (19) obture le troisième embout (15) dans la première position de l'équipage mobile (16).

## Claims

1. Espresso coffee maker comprising a pump (1), a thermal unit (3) intended to receive and heat water under pressure sent by the pump (1), the pump (1) and the thermal unit (3) being connected together by a main pipe (5), a purge pipe (6) for the thermal unit (3) constituting a branch of the main pipe (5), a distribution member (7) interposed between the pump (1) and the thermal unit (3), designed to selectively put in communication the pump (1) and the thermal unit (3) or the thermal unit (3) and the purge pipe (6), and which comprises means acting when the distribution member (7) passes from a first state in which it puts the pump (1) and thermal unit (3) in communication to a second state in which it puts the thermal unit (3) and purge pipe (6) in communication,
**characterised in that** said means are suction means (10) designed to create a negative pressure in the main pipe (5) with respect to the thermal unit (3), such that the residual water contained in the thermal unit (3) is sucked into the purge pipe (6).

2. Espresso coffee maker according to claim 1, **characterised in that** the suction means (10) comprise a housing (10) delimiting a water reception chamber (12) and having first and second connecting pieces (13, 14) which connect the chamber (12) to the main pipe (5) respectively on the same side as the pump (1) and on the same side as the thermal unit (3), and a third connecting piece (15) connected to the purge pipe (6); a movable element (16) with a piston arranged between the first and second connecting pieces (13, 14) and mounted so as to slide in the chamber (12) between a first position corresponding to the first state of the distribution member (7) and a second position corresponding to the second state of the distribution member (7), the said movable element (16) being subjected in its travel to the action of a main return spring (18) disposed axially to the second connecting piece (14).

3. Espresso coffee maker according to claim 2, **characterised in that** the movable element (16) comprises a sleeve (19) mounted so as to slide in the chamber (12) counter to the said main spring (18) and able to cover the second connecting piece (14), and a piston (17) mounted so as to slide in the sleeve (19) counter to a secondary return spring (20).

4. Espresso coffee maker according to claim 3, **characterised in that** the piston (17) closes off the first connecting piece (13) in the second position of the movable element (16), whilst the sleeve (19) closes off the third connecting piece (15) in the first position of the movable element (16).

## Patentansprüche

1. Espressomaschine mit einer Pumpe (1), einem Wärmeblock (3), der zur Aufnahme und zum Erhitzen des von der Pumpe (1) unter Druck geförderten Wassers bestimmt ist, wobei die Pumpe (1) und der Wärmeblock (3) miteinander durch eine Hauptleitung (5) verbunden sind und eine Spülleitung (6) des Wärmeblocks (3) eine Ableitung der Hauptleitung (5) bildet, mit einem Verteilerelement (7), das zwischen die Pumpe (1) und den Wärmeblock (3) eingeschaltet und so ausgebildet ist, daß es wahlweise die Pumpe (1) mit dem Wärmeblock (3) oder den Wärmeblock (3) mit der Spülleitung (6) verbindet, wobei die Maschine Mittel aufweist, die wirksam werden, wenn das Verteilerelement (7) aus einem ersten Zustand, wo es die Pumpe (1) mit dem Wärmeblock (3) verbindet, in einen zweiten Zustand, wo es den Wärmeblock (3) mit der Spülleitung (6) verbindet, gelangt, **dadurch gekennzeichnet, daß** das Mittel eine Ansaugeinrichtung (10) ist, die so ausgebildet ist, daß sie in der Hauptleitung (5) einen Unterdruck bezüglich des Wärmeblocks (3) erzeugt, so daß das im Wärmeblock (3) enthaltene Restwasser in die Spülleitung (6) angesaugt wird.

2. Espressomaschine nach Anspruch 1, **dadurch gekennzeichnet, daß** die Ansaugeinrichtung (10) ein Gehäuse (11) aufweist, das eine Wasseraufnahmekammer (12) begrenzt und einen ersten und einen zweiten Stutzen (13, 14) aufweist, welche die Kammer (12) mit der Hauptleitung (5) jeweils auf der Seite der Pumpe (1) und der Seite des Wärmeblocks (3) verbinden, sowie einen dritten Stutzen (15) aufweist, der mit der Spülleitung (6) verbunden ist, einen beweglichen Kolbenteil (16) aufweist, der zwischen dem ersten und zweiten Stutzen (13, 14) angeordnet und in der Kammer (12) zwischen einer ersten Position, die dem ersten Zustand des Verteilerelements (7) entspricht, und einer zweiten Position, die dem zweiten Zustand des Verteilerelements (7) entspricht, gleitend montiert ist, wobei der bewegliche Kolbenteil (16) in seiner Laufstrecke von einer Hauptrückstellfeder (18) beaufschlagt ist, die axial zum zweiten Stutzen (14) angeordnet ist.

3. Espressomaschine nach Anspruch 2, **dadurch gekennzeichnet, daß** der bewegliche Kolbenteil (16) einen Mantel (19) aufweist, der in der Kammer (12) gegen den Druck der Hauptfeder (18) gleitend montiert ist und den zweiten Stutzen (14) überdecken kann, sowie einen Kolben (17) aufweist, der im Mantel (19) gegen die Wirkung einer zweiten Rückstellfeder (20) verschiebbar montiert ist.

4. Espressomaschine nach Anspruch 3, **dadurch gekennzeichnet, daß** der Kolben (17) den ersten Stutzen (13) in der zweiten Position des beweglichen Kolbenteils (16) verschließt, während der Mantel (19) den dritten Stutzen (15) in der ersten Position des beweglichen Kolbenteils (16) verschließt.
